# EUROPEAN PATENT APPLICATION

(11) **EP 4 170 852 A1**
(43) Date of publication of application: **26.04.2023**
(21) Application number: 21204215.4
(22) Date of filing: 22.10.2021
(51) Int. Cl.: H02J 7/00

(54) **FAULT RESPONSE BYPASS SYSTEM FOR AN ENERGY STORAGE BANK**

(71) Applicant: Hitachi Energy Switzerland AG, 5400 Baden (CH)
(72) Inventor: Noisette, Philippe, 1209 GENEVE (CH); Bai, Haofeng, 722 26 Västerås (SE); Meng, Lexuan, 722 12 Västerås (SE); Wu, Tong, 723 56 Västerås (SE); Söderblom, Anton, 749 43 Enköping (SE); Zhang, Zichi, 723 56 Västerås (SE)
(74) Representative: AWA Sweden AB

(57) **Abstract**

An energy storage system (100) for providing electrical energy to a power grid, the system comprising an energy storage bank (102) and a controller (104) for controlling operation of the energy storage system. The energy storage bank comprises a plurality of storage strings (106) connected in parallel, wherein a storage string comprises a plurality of energy storage units (108) connected in series. An energy storage unit comprises a plurality of energy storage modules (110), a fault switch (112) configured to electrically connect the plurality of energy storage modules to a neighbouring energy storage unit when the fault switch is closed, and electrically disconnect the plurality of energy storage modules from the neighbouring energy storage unit when the fault switch is open, and a bypass switch (114) configured to bypass the plurality of energy modules. The controller is configured to detect a fault in an energy storage unit and, in response to detecting the fault, open the fault switch and close the bypass switch.

## Description

### TECHNICAL FIELD

The present disclosure relates to a safety system for electrical storage banks. In particular, the present disclosure relates to a fault response bypass system for an energy storage bank.

### BACKGROUND

Energy storage systems (ESS) may be arranged into energy storage banks for a range of purposes, such as for providing electrical energy to an electrical grid, powering an electrical vehicle, or other such purposes.

ESS (e.g., capacitors, batteries, etc.) may be prone to overvoltage, overheating, accelerated aging, and may thus expose the energy storage bank and its users/operators to safety risks if the damaged ESS components are not isolated from operation in time. In medium to high voltage applications, the protection and fault tolerance of an ESS bank is especially important but also more challenging than low voltage settings, for example because of the difficulties associated with arc energy during switching operations.

There are a variety of existing technologies attempting to address these concerns. For example, circuit breakers, unidirectional blocking switches, and battery management systems may be employed to respond to ESS bank faults and implement bypasses of a faulty ESS. However, such technologies can be overcomplicated, thus increasing their cost and increasing the chance of failure, and these technologies may be designed for use in low voltage applications and thus may be limited in their reliability if implemented in a medium or high voltage application (e.g. greater than 1.5 kV).

### SUMMARY OF INVENTION

Aspects of the present disclosure provide an improved fault response bypass system for an energy storage bank that increases the reliability and allows for a simple operation of minimal additional components.

According to an aspect, there is provided an energy storage system for providing electrical energy to a power grid. The system comprises an energy storage bank for storing electrical energy, and a controller for controlling operation of the energy storage system.

According to this aspect, the energy storage bank comprises a plurality of storage strings connected in parallel, wherein a storage string of the plurality of storage strings comprises a plurality of energy storage units connected in series, and wherein an energy storage unit of the plurality of energy storage units comprises a plurality of energy storage modules.

The energy bank further comprises a fault switch configured to electrically connect the plurality of energy storage modules of the energy storage unit to a neighbouring energy storage unit in the storage string when the fault switch is closed, and electrically disconnect the plurality of energy storage modules of the energy storage unit from the neighbouring energy storage unit in the storage string when the fault switch is open. The energy storage bank also comprises a bypass switch configured to bypass the plurality of energy modules in the energy storage unit.

According to this aspect, the controller is configured to detect a fault in an energy storage unit, and, in response to detecting the fault, open the fault switch and close the bypass switch. The fault switch and the bypass switch may be part of a single switching device, and the switching operations thereof may happen simultaneously, or in sequence. For example, the fault switch may be opened before or after the bypass switch is closed. In some examples, the fault switch may advantageously take the form of a pyrotechnical switch, configured to open upon firing of a pyrotechnical element. Such pyrotechnical switches can further improve the reliability of the fault response in the energy storage system by effectively destroying the electrical connection through the switch.

The energy storage modules may take any suitable form, such as a lithium ion battery, a lithium ion capacitor, an electric double-layer capacitor (supercapacitor), and/or some other form of energy storage device. The energy storage modules may all be of the same type, or may be a mix of different types of energy storage device, such as lithium ion batteries mixed with supercapacitors.

The controller may be a standalone unit installed on-site with the energy storage bank, or it may be remote therefrom. The controller may be implemented as any combination of hardware and/or software suitable for controlling operations of the energy storage system, and may be integrated into one or more of the components of the energy storage system, or implemented in a cloud-based platform.

According to this foregoing aspect, the energy storage bank is modularised into units that can each be isolated from the energy storage bank upon detection of a fault, without excessively removing capacity from the energy storage bank. Furthermore, the controller being configured to bypass units upon detection of a fault allows for the controller to respond to a potential failure of a fault switch by, for example, opening a fault switch in another unit in the same string. Thus, a combination of the modular design, as well as the controller being configured to open the fault switch and close the bypass switch in each unit, allows for increased reliability of the energy storage system, and reduced system cost because low cost components can be used.

In some examples, the energy storage unit may further comprise a converter configured to sink and/or to source current from/to the energy storage bank, wherein the controller is configured to control an amount of current sunk to and/or sourced from the converter. In essence the converter is enabled to control the charging and/or discharging of the energy storage bank. The converter may be an AC-DC converter, a DC-DC converter, or another type of converter suitable for charging and/or discharging the energy storage bank. The converter may be connected to the energy storage strings of the energy storage bank in a parallel connection therewith.

Advantageously, the controller may be configured to, in response to detecting the fault, control the converter to reduce the current from/to (i.e. sinking or being sourced from) the energy storage bank, for example to a zero or near-zero level (e.g. 20%, 10%, 5%, etc.). Thus, the amount of current being input into or drawn from the energy storage bank (depending on whether the energy storage bank is being charged or discharged, respectively) is lowered when a fault is detected. Hence, when the fault response is activated, the bypass switch is closed and the fault switch is opened at a zero (or lower) current. This may reduce the risk of arcing and/or other damage to the system during the switching operations.

According to some example implementations, the energy storage unit may further comprise a discharging circuit configured to dissipate (i.e. discharge, reduce) energy stored in the plurality of energy storage modules, and a discharge switch configured to engage the discharging circuit, thereby discharging energy stored in the plurality of energy storage modules with the discharge resistor. In this way, the energy storage modules in the energy storage unit containing a faulty module can be rendered safe for maintenance or replacement after being isolated from the energy storage bank.

The discharging circuit may additionally or alternative exploit the presence of balancing resistors internal to the energy storage modules for discharging the energy storage modules. For example, the battery management systems (BMS), or equivalent internal management systems, internal to the energy storage module may be controlled to discharge the cells of the energy storage modules through the balancing resistors. As a further alternative, the energy storage modules may be allowed to discharge over time, i.e. self-discharge, without requiring a discharging circuit.

Although a plurality of energy storage modules is discussed herein, it will be appreciated that one storage module may also be used whilst still realizing the benefits of the present disclosure. Alternatively, the plurality of energy storage modules may number in the tens or hundreds or more, depending on the implementation.

The energy storage modules may, in some examples, be grouped into groups of parallel-connected energy storage modules, each group being connected in series. The groups may comprise similar energy storage devices within the group, or a mix of energy storage devices within the group. As a particular example, a battery-based energy storage module may be paired (by electrical connection in parallel) with a capacitor- (e.g. supercapacitor-) based energy storage module. Such a pairing may advantageously provide rapid charging and discharging at peak demand, via the capacitor-based energy storage module, whilst having a ready energy storage capacitor, via the battery-based energy storage module.

In some examples, each parallel-connected group (e.g. pair, triplet, group often or more or fewer) may be provided with a diode configured to prevent negative discharging, or reversed voltage polarity, from the group. Advantageously, this prevents damage to the system and may isolate faults from one group from damaging other groups within the energy storage module. The diode may take any form, depending on the implementation and the expected magnitude of the currents being handled.

According to another aspect, there is provided a method for controlling the aforementioned energy storage system, the method comprising detecting, by the controller, a fault in an energy storage unit, opening the fault switch in the energy storage unit, and closing the bypass switch in the energy storage unit. The bypass switch may be closed after the fault switch has been opened, thus ensuring reliability in isolation of the fault, or the bypass switch may be closed before (or at the same time as) the fault switch is opened, thus causing no interruption to the operation, and reducing the stress on the opening operation of the fault switch because the arc energy can be lowered (or zero).

For example, the method may comprise, before opening the fault switch, controlling the converter to reduce the current to/from the energy storage system, and after closing the bypass switch, stopping said controlling of the converter. Thus, the reliability and safety of the operation is improved.

In some examples, the method may further comprise, after opening the fault switch, opening at least one fault switch in each additional storage string of the plurality of storage strings. That is, considering that there may be N strings, N fault switches may be opened, such that one (or at least one) fault switch per string is opened. Said opening at least one fault switch in each additional storage string may happen substantially simultaneously with the opening of the fault switch in the energy storage unit containing the faulty module, depending on the particular implementation.

In this way, the stress from removing an energy storage unit can be evenly distributed amongst the energy storage strings. That is, the internal resistance across all of the strings can be made substantially equal by having a similar number of connected energy storage units. Therefore, the current through the strings can be evenly shared, reducing the wear or deterioration of any particular string and thus further prolonging the reliable operational life of the energy storage bank.

According to an example embodiment, the method may further comprise, after opening the fault switch, controlling the converter to reduce the DC link voltage by an amount corresponding to a number of open fault switches. Said controlling may occur before or substantially simultaneously with said opening of the fault switch, depending on the particular implementation.

By controlling the converter in this manner, the voltage expected from the energy storage bank can be adjusted in order to account for fewer energy storage units being available (i.e., because their fault switches have been opened). Thus, the current drawn does not excessively increase and the additional stress put on the components of the energy storage bank can be reduced. Therefore, the wear and deterioration of the components in the energy storage bank can be further reduced, and the reliable operational life of these components can be further prolonged.

In some examples, the detection of a fault may trigger an immediate response from the controller, causing the opening and closing of switches as previously described. Alternatively, the detection may lead to the controller initiating a predefined delay to thereby confirm the detection of the fault. That is, the connections may be maintained for enough time for the fault to be confirmed by the detection systems and for control signals to be exchanged, if required.

Furthermore, in some examples, e.g. particularly if capacitor-based energy storage modules are employed in the energy storage unit, the energy storage modules may be discharged. That is, the method may further comprise after opening the fault switch and closing the bypass switch, closing the discharge switch in the energy storage unit. Thus, a discharge resistor or some other discharge component may expend (some of) the remaining energy in the energy storage modules in the faulty unit so as to render the unit safer to handle and/or replace, if desired.

Thus, as will be appreciated from the forgoing, viewed from these aspects, there is provided a safer and more reliable fault response system for an energy storage bank. The arrangement of a series fault switch coupling one or more energy storage modules of an energy storage to neighbouring unit(s) allows for an advantageously modular arrangement without excessive loss of energy storage when such a unit is isolated. According to implementations, it is therefore possible to tailor and adapt the size and scale of the energy storage modules, the number of modules per energy storage unit, the number of energy storage units per string and/or the number of strings in the energy storage bank.

Whilst the invention is susceptible to various modifications and alternative forms, specific embodiments are shown by way of example in the drawings as herein described in detail. It should be understood, however, that the detailed description herein and the drawings attached hereto are not intended to limit the invention to the particular form disclosed. Rather, the intention is to cover all modifications, equivalents, and alternatives falling within the scope of the appended claims.

Any reference to prior art documents or comparative examples in this specification is not to be considered as an admission that such prior art is widely known or forms part of the common general knowledge in the field.

As used in this specification, the words "comprise", "comprising", and similar words are not to be interpreted in the exclusive or exhaustive sense. In other words, they are intended to mean "including, but not limited to".

### BRIEF DESCRIPTION OF THE DRAWINGS

One or more embodiments will be described, by way of example only, and with reference to the following figures, in which:
Figure 1 schematically shows an energy storage system, according to an embodiment;
Figure 2 schematically shows a configuration of an energy storage bank of the energy storage system, according to an embodiment;
Figures 3A and 3B schematically show a configuration of an energy storage unit of the energy storage bank, according to an embodiment, before and after a fault response has been enacted;
Figures 3C and 3D schematically show an example configuration of an energy storage unit of the energy storage bank, including a discharge circuit, before and after a discharge of the energy storage modules has been enacted;
Figures 4A and 4B schematically show an example energy storage unit of the energy storage bank, with and without a discharging circuit;
Figure 5 schematically shows a method for operating the disclosed energy storage system, according to an embodiment; and
Figure 6 schematically shows a controller of the energy storage system, according to an embodiment.

### DETAILED DESCRIPTION

The present invention is described in the following by way of a number of illustrative examples. It will be appreciated that these examples are provided for illustration and explanation only and are not intended to be limiting on the scope of the present invention. Instead, the scope of the present invention is to be defined by the appended claims. Furthermore, although the examples may be presented in the form of individual embodiments, it will be recognised that the invention also covers combinations of the embodiments described herein.

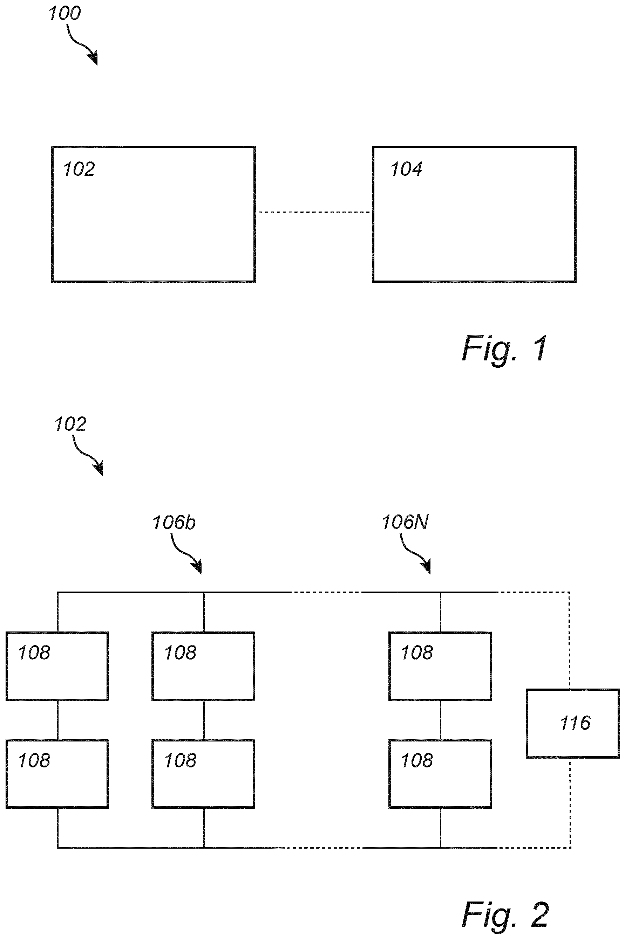

Figure 1 schematically shows an energy storage system 100, according to an embodiment.

According to the illustrated embodiment, the energy storage system 100 comprises an energy storage bank 102 and a controller 104.

The energy storage bank 102 may be configured for providing electrical energy to a power grid, an electric or hybrid vehicle, or some other electrically powered system or device that may require a bank of stored electrical energy. The specifics of the components comprised in the electrical storage bank 102 are discussed below.

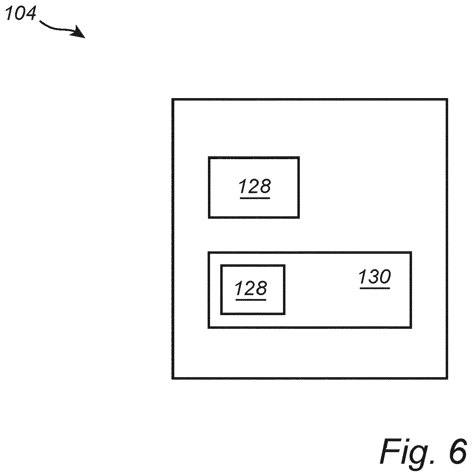

The controller 104 may be a computing device formed of hardware and/or software. Figure 6 schematically shows a controller 104 of the energy storage system 100, according to an embodiment. According to this illustrated embodiment, the controller 104 comprises a processor 128 for executing instructions 132, which may be stored in an internal memory 130 of the controller 104 or may be provided separately as a computer program, e.g. stored on a computer-readable medium.

The controller 104 may be integrated within one or more parts of the energy storage bank 102, or may be a separate component therefrom. As a further alternative, the controller 104 may be implemented on a cloud-based platform or some other remotely implemented computing environment. Furthermore, the controller 104 may be connected by wired or wireless means to the components of the energy storage bank 102 that are required to be controlled by the controller 104.

In preferred embodiments, the controller 104 is connected to controlled components of the energy storage bank 102 via high-speed and low-latency connection(s) so as to improve the speed with which faults in the energy storage bank 102 can be responded to.

Figure 2 schematically shows a configuration of an energy storage bank 102 of the energy storage system 100 such as that shown in Figure 1, according to an embodiment.

As shown in Figure 2, the energy storage bank 102 comprises a plurality of energy storage strings 106a, 106... 106n (collectively, 'energy storage strings 106' or simply 'strings 106'). Each string 106 may be thought of as a branch in a set of parallel branches in the energy storage bank 102. That is, the strings 106 are electrically connected in parallel such that the current being sunk to or sourced from the energy storage bank 102 is sunk/sourced proportionally shared amongst the strings 106.

Each energy storage string 106 comprises a plurality of energy storage units 108 (also referred to as simply 'units 108'). As shown in the electrical schematic of Figure 2, within each string 106, the electrical storage units 108 are connected to each other in series. Specifics of the configuration of the electrical storage units 108 are discussed below.

It will be appreciated that a total current that can be sourced from the energy storage bank 102, for example, will correspond to a sum of the total current that can be sourced from each string 106, which in turn depends on the energy storage capacity of each unit 108 in the string 106.

In some examples, the energy storage system 100 may further comprise a converter 116 configured to sink and/or to source current from/to the energy storage bank 102. Put another way, the converter 116 may act as a means for charging or discharging the energy storage bank 102, depending on the operation stage, i.e. whether the energy storage bank is being used to power a load or being recharged.

The converter 116 may be an AC-AC converter, AC-DC converter, or any other type of converter, with or without isolation, depending on the particular implementation, such as a power grid application, an electric vehicle application, or some other application. As shown in Figure 2, the converter 116 may be connected in parallel to the set of storage strings 106 or in some other fashion. Furthermore, it will be appreciated that the converter 116 may not be formed of a single unit as shown in Figure 2, but may instead be formed from a collection of units, some of which may be integrated into other components, depending on the implementation.

It will be appreciated that the arrangement shown in Figure 2 is purely illustrative and schematic, and is not intended to reflect the true layout or architecture of the energy storage bank 102 and/or converter 116.

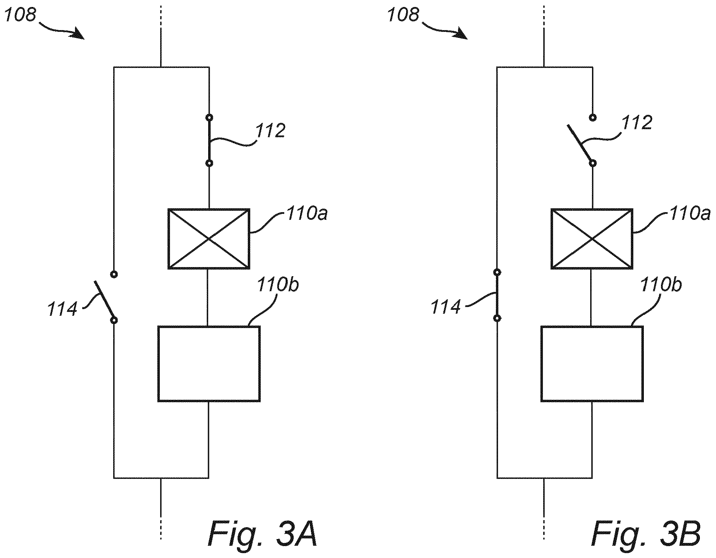

Figures 3A and 3B schematically show a configuration of an energy storage unit 108 of the energy storage bank 102 such as that shown in Figure 2, according to an embodiment, before and after a fault response has been enacted.

As shown in Figures 3A and 3B, the energy storage units 108 such as those shown in Figure 2 may comprise a plurality of energy storage modules 110a and 110b (collectively 'energy storage modules 110', also referred to as simply 'modules 110').

The energy storage modules 110 are the quanta of energy storage in the presently described arrangement, but each energy storage module 110 may itself comprise a number of cells.

For example, the modules 110 may comprise a lithium ion battery, a lead acid battery, or some other form of battery with some other energy storage chemistry, or a lithium ion capacitor, an electric double-layer capacitor or supercapacitor, or some other form of capacitor, or some other form of energy storage device such as a fuel cell or the like.

It will be appreciated that difference forms of energy storage system (ESS) used for the modules 110 will have different advantages. For example, a battery-based module 110 may have superior storage capabilities, whilst a capacitor-based module 110 may have superior response time for charging/discharging current.

The modules 110 may comprise a mix of ESS. For example, module 110a may comprise a supercapacitor, whilst module 110b comprises a lithium ion battery, for example. This particular example may advantageously combine the above mentioned benefits of a capacitor-based and battery-based module 110. Each module 110 may itself consist of a mix of ESS, in some examples.

The modules 110 are connected in series along the energy storage unit 108, i.e. in lines with the series connection between neighbouring units 110. It can be considered that the schematic representation of Figures 3A and 3B is aligned in a same orientation as Figure 2, such that each unit 108 shown schematically as a box in Figure 2 may be replaceable with the more detailed representations of the units in Figures 3A and 3B.

In series with the modules 110, as shown in Figures 3A and 3B, there is provided a fault switch 112 configured to disconnect the modules 110 in the unit 108 from the rest of the string 106 when it is opened. Figure 3A shows the fault switch 112 in the closed position, such that a series connection is formed across the unit 108 through the fault switch 112 and the modules 110.

The fault switch 112 may be any type of mechanically controlled, electrically controlled, locally or remotely controlled switch suitable for disconnecting the modules 110 in the described fashion under control of the controller 104, i.e. in response to a fault in one of the modules 110. The fault switch 112 may preferably comprise a pyrotechnical switch that opens upon firing of a pyrotechnical element (e.g. an element that burns or explodes). It will be appreciated that one or several pyrotechnical switches may be provided, which may be connected in series and/or parallel.

As indicated by the cross through module 110a, the module 110a may experience a fault therein. A fault may include any event that renders the module 110a inoperable or less than fully operable, such as overheating, overvoltage, and/or some other fault that may occur during the life of the module 110a.

The fault in module 110a may be detected by the controller 104 by any means, such as by sending a fault signal to the controller 104 by some internal monitoring means in the module 110a or elsewhere in the unit 108, the string 106, or elsewhere in the energy storage bank 102 or external thereto. Alternatively, the fault may be detected by a monitoring means in the controller itself, which may monitor the operations of the energy storage bank 102. The fault may present as a variation in temperature, connectivity, voltage, current, or resistance in the module 110a, or in some other way, depending on the nature of the fault and/or the capabilities of any such monitoring means.

In response to detecting the fault in module 110a, the controller 104 may cause the fault switch 112 to open, thus disconnecting the modules 110 from the string 106.

In some examples, the controller 104 may be at least partially implemented internally in the unit 108 such that the control signal to open the fault switch 112 originates internally in the unit 108, depending on the particular implementation.

The unit 108 further comprises a bypass switch 114 configured to electrically bypass the modules 110 in the unit 108.

Once the fault switch 112 has been opened, or before the fault switch 112 has been opened, or substantially simultaneously therewith, the bypass switch 114 may be closed so as to allow electrical connection across the unit 108 without passing through and/or connecting to the modules 110. Thus, the modules 110 may be electrically isolated from the rest of the string 106 by opening the fault switch 112 and closing the bypass switch 114, in response to detecting a fault.

As with the fault switch 112, the bypass switch 114 may be any type of switch such as a mechanically or electrically controlled switch suitable for bypassing the modules in response to a fault in one of the modules. The bypass switch 114 may preferably be appropriately rated for medium to high voltage applications.

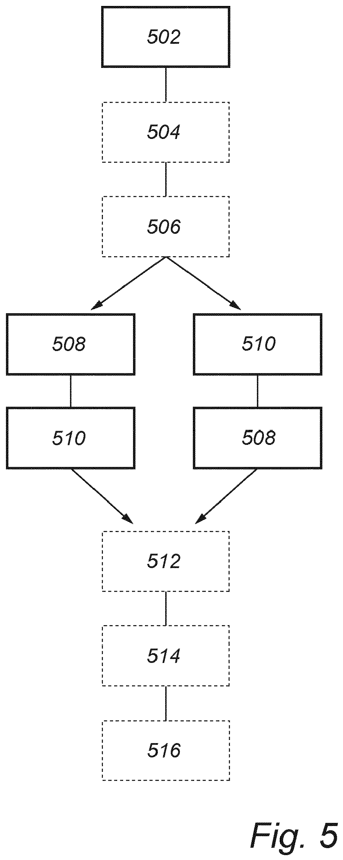

The particular ordering and timing of these switching operations is discussed in more detail below, in relation to Figure 5.

Figure 3B shows the fault switch 112 open and the bypass switch 114 closed. Thus, imagining that the unit 108 is placed between two other units 108 in a string 106, these two other units 108 may be electrically connected via the bypass switch 114 in the illustrated unit 108 of Figure 3B.

In examples where a converter 116 is included, such as in the illustrated example in Figure 2, the converter 116 may be used to reduce the current drawn from or provided to the energy storage bank 102 during the fault response.

For example, the controller 104 may control the converter 116 to reduce the current being sunk to or sourced from the energy storage bank 102 before the fault switch 112 is opened and the bypass switch is closed 114. The converter 116 may be controlled to reduce the current to zero.

Therefore, the switching operations of the fault switch 112 and the bypass switch 114 may occur at a zero or low current state, which may reduce the arc energy across the fault switch 112 and the bypass switch 114. As a result, the switching operations can be made more reliable, safer, and/or quicker.

As mentioned above, the reliability and/or speed of the opening of the fault switch 112 may be further improved by configuring the fault switch with a pyrotechnical element that, upon firing, activates a pyrotechnical element that physically breaks the electrical connection across the fault switch 112 i.e. as a result of burning or exploding. Such components are, advantageously, relatively low cost and simple to replace after use.

The controller 104 may be further configured to control the converter 116 to reduce the DC link voltage of the converter 116. That is, the converter 116 may have its requested output voltage adjusted in line with the reduced available capacity in the energy storage bank 102 such that the remaining operational modules 110 in the energy storage bank 102 are not put under further stress.

For example, converter 116 may be controlled to reduce the DC link voltage by an amount corresponding to the unit 108 having the fault, as this is the amount of capacity being disconnected from the energy storage bank 102 by the opening of the fault switch 112.

In some examples, the response to a module fault in a unit 108 of a particular string 106, causing the opening of the fault switch 112 in said unit 108, may also include the opening of fault switches 112 in other units 108, thus reducing the burden on the string 106 having the fault.

For example, considering Figure 2, the unit 108 having the fault is shown enclosed in a dotted box, and belongs to string 106a. In addition to the fault switch 112 being opened in response to the detection of said fault, fault switches in strings 106b... 106N may also be opened. In some examples, a number of fault switches 112 opened may correspond to a number of strings 106, i.e. if there are N strings 106, N fault switches 112 may be opened, such that one fault switch 112 per string 106 is opened.

In some other examples, multiple fault switches 112 may be opened per string 106, depending on, for example, the capacity of the particular string 106, the fault response policy, the determined or desired reliability of the fault response system, or some other metric or policy.

Considering an example whereby each string 106 has an equal capacity, and one fault switch 112 is opened per string in response to the fault detection (each fault switch 112 being accompanied by a closing of the respective bypass switch 114 in the respective unit 108), the internal resistance of the strings 106 is kept substantially even. That is, the resistance through the bypass switch 114 may differ from that of the modules 110 in the unit 108. Thus, the triggering of the fault switch 112 and bypassing of the modules 110 using the bypass switch 114 may change the resistance of the unit 108.

If a unit 108 has a changed resistance, its respective string 106 may thus have a changed resistance. As a consequence, the current flowing through said string 106 may change, e.g. increase. This may lead to additional stress on this string 106, which could cause further faults therein.

In examples where a converter 116 is included, the converter 116 may be controlled to reduce the DC link voltage by an amount corresponding to a total number of disconnected modules 110, or fault switches 112, or measured/estimated change in resistance, or some other metric that corresponds to a potential change in current flow through strings 106 caused by the fault. Therefore, the current flowing through the strings 106 may be substantially maintained unchanged relative to the amount of current flowing through said strings 106 before the fault. Hence, further stress on the strings 106, and hence further faults, can be advantageously avoided.

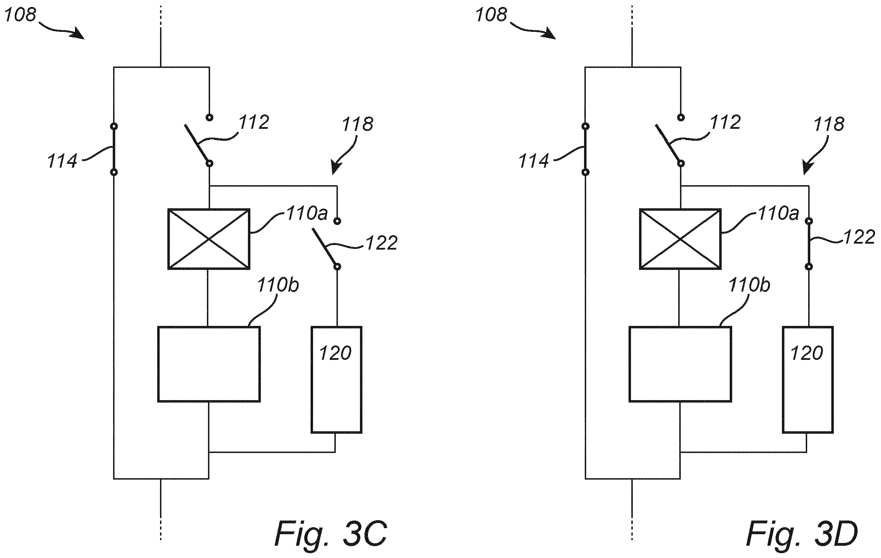

Figures 3C and 3D schematically show an example configuration of an energy storage unit 108 of the energy storage bank 102 such as that shown in Figure 2, further including an optional discharge circuit 118, before and after a discharge of the energy storage modules 110 has been enacted.

For the sake of conciseness, similar components discussed in relation to Figures 3A and 3B are not discussed again and like-numbered components may be considered to be substantially similar or equivalent to like-numbered components in Figures 3A and 3B.

The units 108 illustrated in Figures 3C and 3D further comprise an optional discharging circuit, generally indicated by the arrow 118.

The discharging circuit 118 comprises a discharge resistor 120 and a discharge switch 122. It will be appreciated that, although the discharge resistor 120 and the discharge switch 122 are shown as single components, they may instead be a collection of components that in combination provide an equivalent function to that described.

The discharging circuit 118 is connected across the energy storage modules 110, having a connection between the fault switch 112 and the modules 110 so that opening of the fault switch 112 does not disconnect the modules 110 from the discharging circuit 118.

The discharging circuit 118 is configured to discharge the modules 110, for example as part of the fault response control functionality. In some examples, the discharging switch 122 may be closed after (or substantially simultaneously with) the opening of the fault switch 112 and/or the closing of the bypass switch 114. In other examples, the closing of the discharging switch 122 may anticipate the opening of the fault switch 112 and/or the closing of the bypass switch 114.

The discharge switch 122 may be any suitable type of switch, being mechanically or electrically controlled, such control be remote or local to the switch.

The discharge resistor 120 may be sized and rated appropriately for rapid discharge of the modules 110 without excessive thermal output. For example, the discharge resistor 122 may preferably have a high-resistance, low-power and low-energy rating.

It will be appreciated that a capacitor-based ESS used in modules 110 would discharge more readily than a higher capacity battery-based ESS used in the modules 110. Thus, the discharging circuit 118 may only be included for units having such capacitor-based modules 110, or the discharging circuit 118 may only be connected across modules 110 in the unit 108 that contain a capacitor-based ESS.

In some examples, a self-discharge of the bypassed modules 110 may be implemented instead of using a dedicated discharging circuit 118. That is, after some wait period, it may be expected for the module(s) to have discharged sufficiently as a result of their imperfect energy storage retention abilities.

In some other examples, the modules 110 may further comprise a batter management system (BMS) or some other management system with similar function to a BMS for a battery. As part of the BMS, the modules 110 may further comprise internal resistors such as balancing resistors. Therefore, instead of using a discharging circuit 118, the BMS of the module 110 (or equivalent system) may be controlled to discharge the module(s) 110 using the internal resistors.

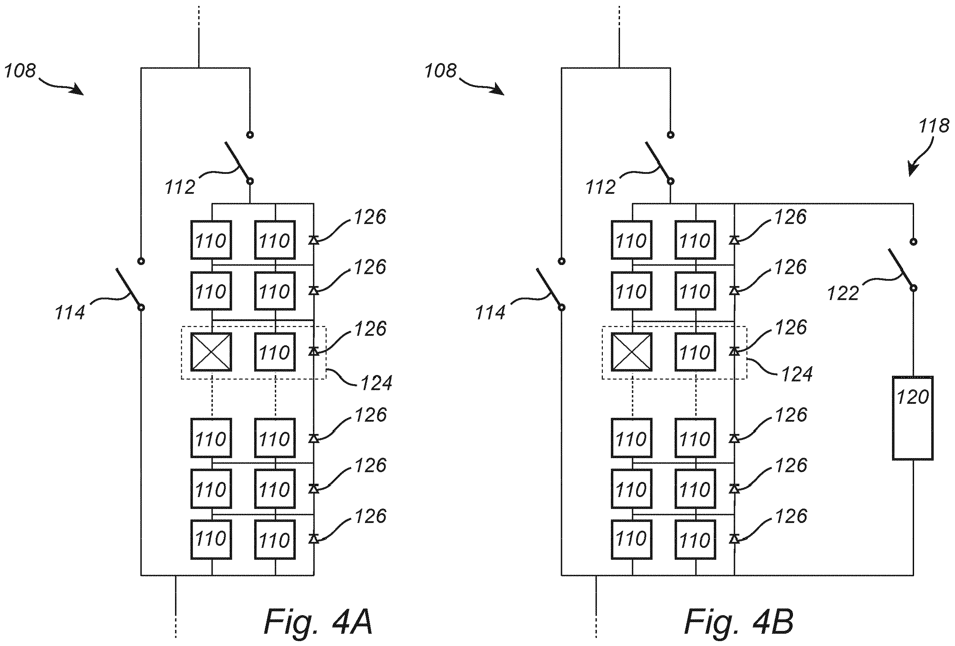

Figures 4A and 4B schematically show an example configuration of an energy storage unit 108 of the energy storage bank 102 such as that shown in Figure 2, with and without a discharging circuit 118.

For the sake of conciseness, it can be considered that like-numbered components may have similar or equivalent functionalities and configurations as like-numbered components in Figures 3A-D.

As illustrated in Figures 4A and 4B, the plurality of energy storage modules 110 are arranged into groups 124, where one group 124 is indicated by the dotted box in Figures 4A and 4B.

In the illustrated example, there are two modules 110 per group 124. Modules 110 in a group 124 are connected to each other in parallel, whilst neighbouring groups 124 are connected in series, as illustrated. Although there are only two modules 110 per group 124 in this example, it will be appreciated that there could be more modules 110 per group 124, depending on the implementation. Furthermore, although each group 124 is shown having a same number of modules 110 (i.e., two modules 110), it will be appreciated that the number of modules 110 per group 124 may vary between groups 124, and not all modules 110 in the unit 108 may be contained in a group 124.

According to some examples, modules 110 in a group 124 may have a same ESS type, or may contain a mix of different ESS types, depending on the implementation, as previously discussed.

Such an arrangement of groups 124 can provide an improved distribution of current between modules 110 in a unit 108, thus further prolonging the operational life of the modules 110 in the energy storage bank 102.

In the illustrated example, the fault switch 112 and the bypass switch 114 are shown as being both open. However, this is purely for illustration and, in operation, it may be that one or more of the fault switch 112 and the bypass switch 114 are closed, as previously described. The same applies to the discharge switch 122 in Figure 4B.

As shown in Figures 4A and Figure 4B, each group 124 is provided with a negative discharge diode 126 (also referred to as simply 'diode 126') arranged to prevent a negative discharge, i.e., reversed voltage polarity, of the group 124. That is, the diode 126 is configured for substantially unidirectional current flow therethrough, and is aligned in the direction intended for charging and discharging of the modules 110.

Therefore, the provision of the diode 126 in each group 124 advantageously mitigate the occurrence of a fault in one group 124 (e.g. as indicated by the cross through one of the modules 110) from propagating damage to other groups 124 and other modules 110. Therefore, the damage caused by the fault can be further limited.

The diode 126 may take any appropriate form, and may be preferably configured for and rated for a medium to high voltage application.

Although pluralities of strings 106, units 108, and modules 110 are referred to herein, it will be appreciated that at least some of the described advantages of the present invention could be realised with only one such item.

Furthermore, it will be appreciated that each unit 108 may further comprise multiple arrangements such as that illustrated in Figure 4A and/or Figure 4B. That is, a unit 108 may comprise a configuration that combines Figures 4A and 4B for redundancy. For example, in such a combined arrangement, the inclusion of the discharging circuit 118 around the modules 110 in Figure 4B may be motivated by their having a capacitor-based ESS.

In such an example, the modules 110 from Figure 4A may be bypassed without impacting the operation of the modules from Figure 4B. Indeed, similar such adaptations may be made for further redundancy and fault resistance and tolerance, depending on the level of fault tolerance required by the particular implementation. In any event, it will be appreciated that such combinatory modifications and adaptations will not depart from the scope of the invention as defined by the appended claims.

Figure 5 schematically shows a method 500 for operating the disclosed energy storage system 100, according to an embodiment.

According to the illustrated method 500, the first step, 502, is the detection of a fault. The fault may be detected in any manner and may be based on any one metrics or combination of metrics, as previously discussed. The fault may be associated with a particular unit, or with a particular module within the unit, for example.

The detection of the fault 502 may further trigger a notification to a human user so that it can be assessed whether intervention is needed.

As a further optional step 504 (as indicated by the dotted lines around the box 504), the method 500 may further comprise initiating a wait or delay before further controls are instigated. This may allow for an exchange of signals between the faulty unit and the controller, or this may allow the controller to monitor a seemingly faulty unit to confirm the presence of a fault, for example.

The controller may then optionally control the converter to reduce the current being discharged from or charged to the energy storage bank, as indicated by the box 506. In some examples, the controller may control the converter to reduce the current to zero. Such a control may advantageously allow for subsequent switching operations in the energy storage bank to occur at a low or zero current, which may reduce the arc energy across switches and thus allow the switching operations to be more reliable and/or faster.

The method 500 further comprises opening the bypass switch 508 and closing the bypass switch 510. As shown in Figure 5, these switching operations may occur in either order, or may occur substantially simultaneously, depending on the implementation and desired reliability. For example, it may improve reliability of the fault response system to open the fault switch before closing the bypass switch. However, closing the bypass switch before opening the fault switch may advantageously provide no interruption in a supply of power from the energy storage bank during a fault response.

In a case where a fault switch fails to open in a faulty unit, the controller may open one or more fault switches in other units within the same string and/or may control the converter to reduce the current being sunk to or sourced from the energy storage bank, if this has not already been done.

In some examples, and as indicated by the box 512, the method 500 may further comprise opening further faults switches, depending on the implementation. For example, as discussed above, the controller may control one or more fault switches in each other string to open in response to the detection of the fault.

As indicated by the box 514, the method 500 may further optionally include controlling the converter to reduce the DC link voltage. For example, the DC link voltage may be changed by an amount corresponding to a number of open fault switches, a detected change in resistance or output power, or some other metric or indicator that such a change in DC link voltage is required.

Therefore, the stress on the remaining connected units, e.g. the other units in the string having the fault, are not overstressed as a result of the faulty unit being bypassed. Thus, as discussed above, the operational life of the components of the energy storage bank can be further improved.

A discharging circuit, if used, may be activated, e.g. by closing a discharge switch to connect a discharge resistor across the module(s) as discussed above. This step is represented by the box 516.

Although the steps of the method 500 have been presented in a particular order, it will be appreciated that, unless specifically stated otherwise, these steps could be rearranged in order or could occur substantially simultaneously with one another, whilst still realising the benefits of the present invention discussed herein.

Figure 6 shows a controller 104 comprising circuitry configured to perform a method similar to the one discussed above with reference to Figure 5. The circuitry may for example comprise a processor 128, and a non-transitory computer-readable storage medium 130, e.g. in the form of a memory, wherein the non-transitory computer-readable storage medium comprises computer-readable instructions 132 that, when executed by the processor 128, cause the controller 104 to execute the method 500 of Figure 5. These instructions 132 may be part of a computer program, which may be stored on a computer-readable medium.

## Claims

1. An energy storage system (100) for providing electrical energy to a power grid, the system comprising:
an energy storage bank (102) for storing electrical energy; and
a controller (104) for controlling operation of the energy storage system;
wherein the energy storage bank comprises:
a plurality of storage strings (106) connected in parallel;
wherein a storage string of the plurality of storage strings comprises:
a plurality of energy storage units (108) connected in series;
wherein an energy storage unit of the plurality of energy storage units comprises:
a plurality of energy storage modules (110);
a fault switch (112) configured to:
electrically connect the plurality of energy storage modules of the energy storage unit to a neighbouring energy storage unit in the storage string when the fault switch is closed; and
electrically disconnect the plurality of energy storage modules of the energy storage unit from the neighbouring energy storage unit in the storage string when the fault switch is open; and
a bypass switch (114) configured to bypass the plurality of energy modules in the energy storage unit;
wherein the controller is configured to:
detect a fault in an energy storage unit; and
in response to detecting the fault:
open the fault switch; and
close the bypass switch.

2. The energy storage system according to claim 1, further comprising a converter (116) configured to sink and/or to source current from/to the energy storage bank, and wherein the controller is configured to control an amount of current sunk to and/or sourced from the converter.

3. The controller according to claim 2, wherein the controller is further configured to, in response to detecting the fault, control the converter to reduce the current from/to the energy storage bank.

4. The energy storage system according to any of claims 1 to 3, wherein the energy storage unit further comprises a discharging circuit (118) connected across the plurality of energy storage modules.

5. The energy storage system according to claim 4, wherein the discharging circuit comprises:
a discharge resistor (120) configured to dissipate energy stored in the plurality of energy storage modules; and
a discharge switch (122) configured to engage the discharging circuit, thereby discharging energy stored in the plurality of energy storage modules with the discharge resistor.

6. The energy storage system according to any preceding claim, wherein the plurality of energy storage modules comprises a plurality of groups of parallel-connected energy storage modules (124), each group being connected in series.

7. The energy storage system according to claim 6, wherein each group of parallel-connected energy storage modules is provided with a diode (126) configured to prevent reversed voltage polarity of the group.

8. The energy storage system according to any preceding claim, wherein the fault switch comprises a pyrotechnical switch configured to open upon firing of a pyrotechnical element.

9. A method for controlling the system of claim 1, comprising:
detecting, by the controller, a fault in an energy storage unit;
opening the fault switch in the energy storage unit; and
closing the bypass switch in the energy storage unit.

10. The method according to claim 9, wherein the closing of the bypass switch occurs after the opening of the fault switch.

11. The method according to claim 10, further comprising:
before opening the fault switch, controlling the converter to reduce the current to/from the energy storage system; and
after closing the bypass switch, stopping said controlling of the converter.

12. The method according to any of claims 9 to 11, further comprising:
after opening the fault switch, opening at least one fault switch in each additional storage string of the plurality of storage strings.

13. The method according to any of claims 9 to 12, further comprising:
after opening the fault switch, controlling the converter to reduce the DC link voltage by an amount corresponding to a number of open fault switches.

14. The method according to any of claims 9 to 13, further comprising:
in response to detecting the fault, initiating a predefined delay to thereby confirm the detection of the fault.

15. The method according to any of claims 9 to 15, further comprising:
after opening the fault switch and closing the bypass switch, closing the discharge switch in the energy storage unit.
